# EUROPÄISCHE PATENTSCHRIFT

(11) **EP 3 111 110 B1**
(45) Veröffentlichungstag und Bekanntmachung des Hinweises auf die Patenterteilung: **08.04.2020**
(21) Anmeldenummer: 15701469.7
(22) Anmeldetag: 16.01.2015
(51) Int. Cl.: F16H 57/01, F16H 57/02

(54) **GETRIEBE MIT GEHÄUSETEIL, MODUL UND ANTENNENLEITUNG**
TRANSMISSION WITH A HOUSING PART, MODULE AND ANTENNA LINE
ENGRENAGE COMPORTANT UNE PARTIE BOÎTIER, UN MODULE ET UNE LIGNE D'ANTENNE

(30) Priorität: 27.02.2014 DE 102014002628
(43) Veröffentlichungstag der Anmeldung: 04.01.2017
(73) Patentinhaber: SEW-EURODRIVE GmbH & Co. KG, 76646 Bruchsal (DE)
(72) Erfinder: TEGELTIJA, Miki, 76689 Karlsdorf-Neuthardt (DE)
(86) Internationale Anmeldenummer: PCT/EP2015/000070
(87) Internationale Veröffentlichungsnummer: WO 2015/128050

(56) Entgegenhaltungen:
- WO-A1-2014/031749
- DE-A1-102008 045 476
- US-A1- 2007 298 929

## Beschreibung

Die Erfindung betrifft ein Getriebe mit Gehäuseteil, Modul und Antennenleitung.

Es ist allgemein bekannt, dass ein Getriebe ein Gehäuseteil aufweist und im Innenraumbereich des Getriebes zumindest teilweise Schmieröl eingefüllt ist.

Aus der US 2007/298929 A1 ist ein Automatikgetriebe mit einer berührunglosen Schnittstelle bekannt, welches nach Auffassung der Prüfungsabteilung des europäischen Patentamts unter den Wortlaut des Oberbegriffs des Anspruchs 1 fällt.

Aus der DE 10 2008 045476 A1ist ein Verfahren zur Wartung von Komponenten bekannt, die als Typenschild RFID-Transponder aufweisen.

Aus der WO 2014/031749 A1 ist ein Condition Monitoring System mit berührungsloser Schnittstelle bekannt.

Der Erfindung liegt daher die Aufgabe zugrunde, ein Getriebe kompakter zu gestalten.

Erfindungsgemäß wird die Aufgabe bei dem nach den in Anspruch 1 angegebenen Merkmalen gelöst.

Wichtige Merkmale der Erfindung bei dem Getriebe mit Gehäuseteil, Modul und Antennenleitung sind, dass das Modul im Innenraumbereich des Getriebes angeordnet ist, wobei ein vom Modul erzeugtes Signal, insbesondere hochfrequentes Signal, mittels der Antennenleitung gesendet wird und von einem außerhalb des Getriebes angeordneten Empfänger empfangbar ist oder zu einem außerhalb des Getriebes angeordneten Empfängers übertragbar ist.

Von Vorteil ist dabei, dass im Modul gespeicherte Daten oder mit einem Sensor erfasste Daten kontaktlos übermittelbar sind. Da die Daten im Innenraumbereich des Getriebes gespeichert werden und/oder erfasst werden, ist ein Typenschild des Getriebes einsparbar und somit das Getriebe kompakter gestaltbar. Ein von Verzahnungsteilen oder anderen Funktionsteilen freier Bereich im Innenraum ist nutzbar. Daten oder Informationen aus dem geschützten Innenraumbereich des Getriebes sind somit in einfacher Weise an eine übergeordnete Steuerung oder dergleichen übermittelbar.

Bei einer vorteilhaften Ausgestaltung ist die Antennenleitung vom Modul durch eine durch das Gehäuseteil durchgehende Ausnehmung geführt,
insbesondere wobei ein Isoliermittel zwischen der Antennenleitung und dem Gehäuseteil angeordnet ist,
insbesondere wobei das Isoliermittel eine Ummantelung der Antennenleitung und/oder eine Dichtscheibe und/oder Dichtring ist. Von Vorteil ist dabei, dass eine hochfrequente Signalspannung zwischen Antennenleitung und Gehäuseteil anlegbar ist.

Bei einer vorteilhaften Ausgestaltung weist das Modul eine elektronische Schaltung auf, insbesondere umfassend einen elektronischen Speicher, insbesondere einen langzeitstabilen Speicher. Von Vorteil ist dabei, dass Typenschilddaten, andere technische Daten des Getriebes oder Verkaufsdaten hinterlegbar sind.

Bei einer vorteilhaften Ausgestaltung ist die elektronische Schaltung mit einem Sensor zur Erfassung der Werte einer physikalischen Größe verbunden. Von Vorteil ist dabei, dass in einfacher Weise die erfassten Werte übermittelbar sind.

Bei einer vorteilhaften Ausgestaltung ist die elektronische Schaltung des Moduls versorgt aus einem Peltierelement und/oder aus einem Piezo-Element. Vorteiligerweise ist somit das Modul aus einer Verlustleistungsart des Getriebes versorgbar. Das Peltierelement nutzt dabei eine bei Betrieb des Getriebes entstehende Temperaturdifferenz aus, beispielsweise zwischen einem erwärmten Bauteil und der Umgebungstemperatur oder Gehäusetemperatur aus. Das Piezo-Element ist beispielsweise an seiner ersten Seite mit dem Gehäuse verbunden und an der vom Gehäuse abgewandten Seite mit einem mit einer Masse verbundenen Federelement, so dass aus bei Betrieb angeregten Schwingungen elektrische Spannung erzeugbar ist, aus der die elektronische Schaltung versorgbar ist.

Bei einer vorteilhaften Ausgestaltung ist im Speicher auch eine Identitätsinformation, insbesondere also Information zur eindeutigen Identifizierung, gespeichert ist und/oder die Information eines elektronischen Typenschildes. Somit ist ein außen angeordnetes optisch ablesbares Typenschild einsparbar oder der Speicher alternativ als redundanter Informationsträger einsetzbar, so das auch ein elektronisches Ablesen ermöglicht ist.

Bei einer vorteilhaften Ausgestaltung ist die elektronische Schaltung samt Antennenleitung derart gestaltet, dass sie einem RFID entsprechend verwendbar ist, insbesondere also von einem RFID-Lesegerät Daten aus dem Speicher lesbar sind. Von Vorteil ist dabei, dass schon bei Herstellung dem mit dem Gehäuse verbundenen Modul eine Identifizierungsinformation einspeicherbar ist und in nachfolgenden Herstellungsverfahrensschritten ablesbar ist oder in nachfolgenden Installationsverfahrensschritten oder im nachfolgenden Betrieb. Somit ist das Getriebe für Internet 4.0 verwendbar.

Ein weiteres wichtiges Merkmal der Erfindung ist, dass die Antennenleitung vom Modul durch eine durch das Gehäuseteil durchgehende Ausnehmung geführt ist, wobei die Ausnehmung eine Gewindebohrung ist, in welche eine Verschlussschraube eingeschraubt ist, wobei die Antennenleitung vorzugsweise mittig in der Verschlussschraube vom Innenraumbereich des Getriebes zur äußeren Umgebung des Getriebes durchgeführt ist. Von Vorteil ist dabei, dass das Herausführen in dichter Weise, also in hoher Schutzart, ausführbar ist.

Bei einer vorteilhaften Ausgestaltung ist die Ausnehmung von einer Verschlusskappe verschlossen,
wobei das Modul an der dem Innenraumbereich des Getriebes zugewandten Seite des Getriebes angeordnet ist, insbesondere mit der Verschlusskappe verbunden ist. Von Vorteil ist dabei, dass eine kostengünstige Abdichtung für hohe Schutzart einsetzbar ist.

Bei einer vorteilhaften Ausgestaltung ist die Verschlusskappe aus Kunststoff hergestellt, insbesondere als Kunststoffspritzgussteil. Von Vorteil ist dabei, dass eine kostengünstige Herstellung ausführbar ist.

Bei einer vorteilhaften Ausgestaltung ist die mit dem Modul, insbesondere mit der elektronischen Schaltung des Moduls, elektrisch verbundene Antennenleitung in der Verschlusskappe mit Kunststoff umspritzt angeordnet,

insbesondere als Antenne. Von Vorteil ist dabei, dass kein von außen beschädigbarer Draht vorhanden ist.

Bei einer vorteilhaften Ausgestaltung ist ein als Antenne fungierender Teil der Antennenleitung samt seiner als Isoliermittel fungierenden Ummantelung pressverbunden mit dem Gehäuseteil. Von Vorteil ist dabei, dass eine einfache Verbindungstechnik einsetzbar ist und trotzdem eine hohe Schutzart erreichbar ist.

Bei einer vorteilhaften Ausgestaltung ist das Modul magnetisch an der Verschlusskappe gehalten, wobei das Modul und/oder die Verschlusskappe einen Dauermagneten aufweist,
insbesondere wobei der Dauermagnet mit Kunststoff umspritzt ist
und/oder wobei das Modul und/oder die Verschlusskappe ein ferromagnetisches Teil aufweist, das mit dem Dauermagneten in Wirkverbindung ist, insbesondere von dem Dauermagneten angezogen wird. Von Vorteil ist dabei, dass ferromagnetische metallische Partikel, wie Abrieb aus dem Eingriffsberiech der Verzahnungen, angezogen werden und somit aus dem Schmieröl herausgezogen sind. Somit ist die Standzeit des Getriebes verbessert. Darüber hinaus ist das Modul in einfacher Weise befestigbar an der Verschlusskappe. Zur Positionierung des Moduls ist an der dem Getriebeinnenraumberiech zugewandten Seite der Verschlusskappe ein Zentrierkragen aus Kunststoff ausbildbar. Der Zentrierkragen umläuft vorzugsweise den Dauermagneten.

Die Erfindung wird nun anhand von Abbildungen näher erläutert:
In der Figur 1 ist ein erfindungsgemäßes Getriebe mit Antenne 4 in Schrägansicht gezeigt.
In der Figur 2 ist das Getriebe nach Figur 1 angeschnitten dargestellt.
In der Figur 3 ist ein weiteres erfindungsgemäßes Getriebe angeschnitten und in Schrägansicht gezeigt, wobei eine Ausnehmung 30 für eine Verschlussschraube 40 gezeigt ist, die zur Herausführung der Antennenleitung vorsehbar ist.
In der Figur 4 ist bei dem Getriebe nach Figur 3 die Verschlussschraube 40 eingesetzt .
In der Figur 5 ist ein weiteres erfindungsgemäßes Getriebe mit Verschlusskappe 50 angeschnitten und in Schrägansicht gezeigt.
In der Figur 6 ist eine zur Figur 5 zugehörige Schrägansicht des Getriebes gezeigt.

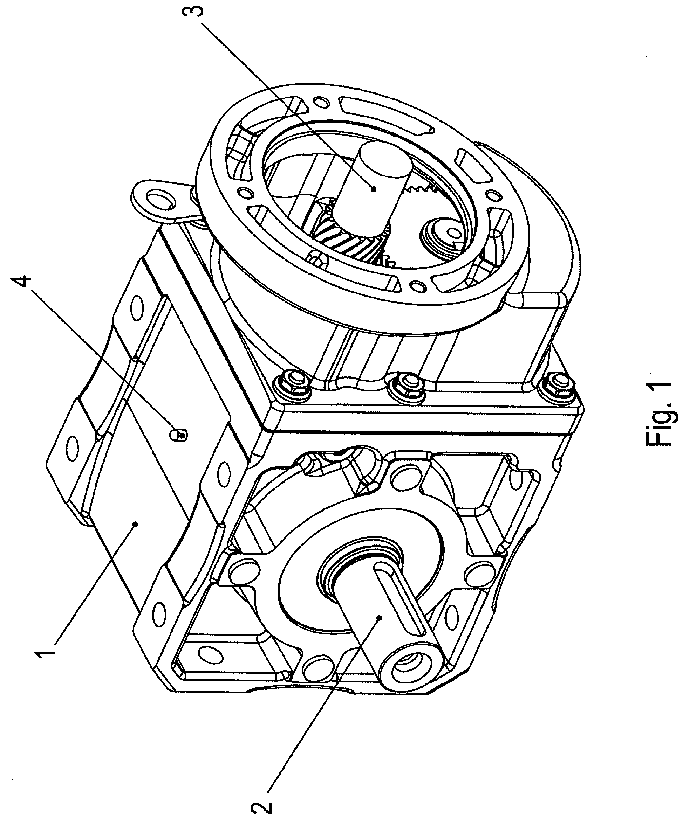

Wie in Figur 1 gezeigt, weist das Getriebe ein Gehäuseteil 1 auf, welches eine Ausnehmung aufweist, durch welche eine Antenne 4 aus dem Innenraumbereich des Getriebes herausführbar ist. Hierbei weist die Antenne 4 eine vom Gehäuseteil 1 elektrisch isolierte Antennenleitung auf, wobei die elektrische Isolierung mittels einer Ummantelung realisierbar ist, wobei die Ummantelung vorzugsweise aus Kunststoff gefertigt ist.

Die eintreibende Welle ist mit der Rotorwelle eines Elektromotors drehfest verbindbar. Eine Ritzelverzahnung ist mit der eintreibenden Welle drehfest verbunden, wobei die Ritzelverzahnung mit einem Zahnrad, insbesondere Planrad, im Eingriff ist. Das Zahnrad ist drehfest mit der Abtriebswelle 2 verbunden, so dass das Getriebe einstufig ausgeführt ist.

Innerhalb des Getriebes, also im Innenraumberiech des Getriebes ist ein Modul 20 angeordnet, welches einen Sensor und/oder eine elektronische Schaltung aufweist. Dieses Modul umfasst hierbei auch einen Speicher zum Speichern von Daten, wie Typenbezeichnung, Versionen und/oder Verkaufsdaten. Der Speicher ist also auch als elektronisches Typenschild nutzbar.

Mit dem Modul 20 ist eine Antennenleitung verbunden, die durch eine Ausnehmung in der Wandung des Gehäuseteils 1 geführt ist und somit als Antenne verwendbar ist. Vorzugsweise ragt die Antennenleitung aus dem Gehäuseteil 1 etwas heraus und strahlt somit effektiver ab.

Mittels der Ummantelung ist ein Kurzschluss zum Gehäuseteil 1 vermieden und eine hochfrequente Signalspannung anlegebar zwischen Gehäuseteil 1 und Antennenleitung. Bei geeigneter Dimensionierung der Ummantelung ist eine Presspassung zwischen der Berandung der Ausnehmung und der Ummantelung bewirkbar.

Vorzugsweise wird hierbei eine für WLAN geeignete Frequenz verwendet, also ein Frequenzband im GHz-Bereich.

Zusätzlich ist zur Verbesserung der Abdichtung auch ein O-Ring vorsehbar, der die Ummantelung der Antenne 4 umgibt und

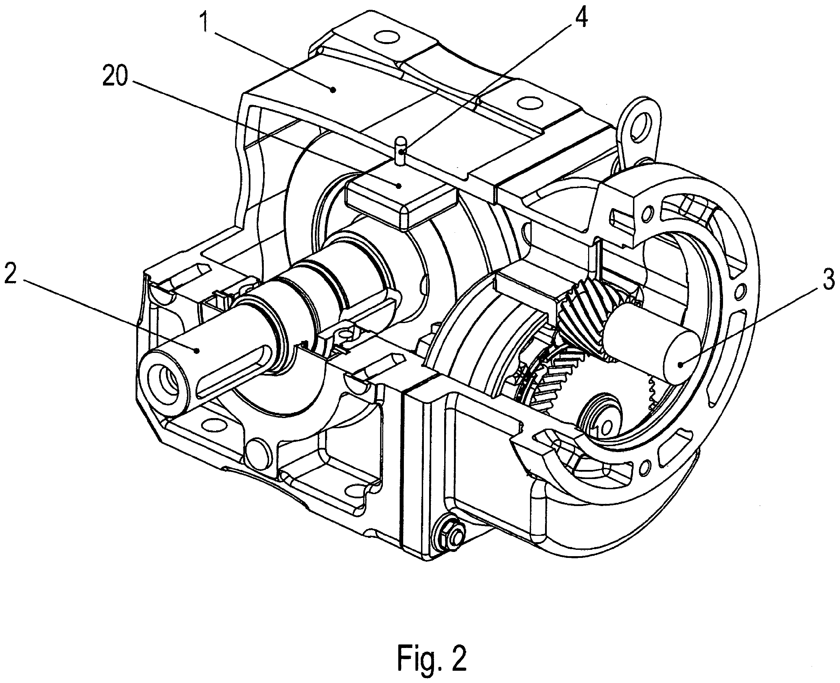

Wie in Figur 2 gezeigt, ist das Modul 20 an der Innenseite des Gehäuseteils 1 angeordnet und mit diesem verbunden, insbesondere schraubverbunden und/oder klebeverbunden. Vorzugsweise besteht auch ein elektrischer Kontakt zwischen dem Modul 20 und dem Gehäuseteil 1, so dass die hochfrequente Signalspannung zwischen Gehäuseteil und Antennenleitung aufbaubar ist.

Am Modul 20 angeordnet oder mit dem Modul 20 elektrisch verbunden ist ein Sensor, der Werte einer physikalischen Größe des Getriebes erfasst, wie beispielsweise Temperatur, Ölalterung, Ölviskosität und/oder Körperschall oder sonstige Schwingungen. Es sind aber auch Drehzahl und/oder Drehmoment erfassbar. Das Sensorsignal wird an das Modul 20 übertragen und von diesem über die Antennenleitung abgestrahlt an eine außerhalb des Getriebes angeordnete Empfängerschaltung, die mit einer Steuerung oder einer anderen elektronischen Schaltung verbunden ist. Somit sind dort das Sensorsignal und/oder die erfassten Werte der physikalischen Größe auswertbar und der Betrieb des Getriebes davon abhängig steuerbar. Beispielsweise wird bei hoher Temperatur oder Körperschall, der auf einen Lagerschaden hindeutet, eine Warnung herausgegeben oder der Betrieb des Getriebes gestoppt, also der eintreibende mit dem Getriebe verbundene Motor gestoppt.

Die elektrische Versorgung des Moduls 20 ist aus einer Verlustenergie des Getriebes bereitstellbar, wobei hier insbesondere ein Temperaturgefälle mittels Peltierelement oder Seebeck-Effekt ausnutzbar ist und/oder Körperschallschwingungen über ein Piezoelement nutzbar sind.

Bei einem weiteren erfindungsgemäßen Ausführungsbeispiel ist das Modul 20 nicht direkt am Gehäuseteil 1 angeordnet sondern ein Piezoelement ist zwischen dem Modul und dem Gehäuseteil 1 angeordnet. Somit dient die Masse des Moduls 20 als träge Masse zur Erzeugung einer Auslenkung des Piezoelements gemäß der jeweils anregenden Schwingung.

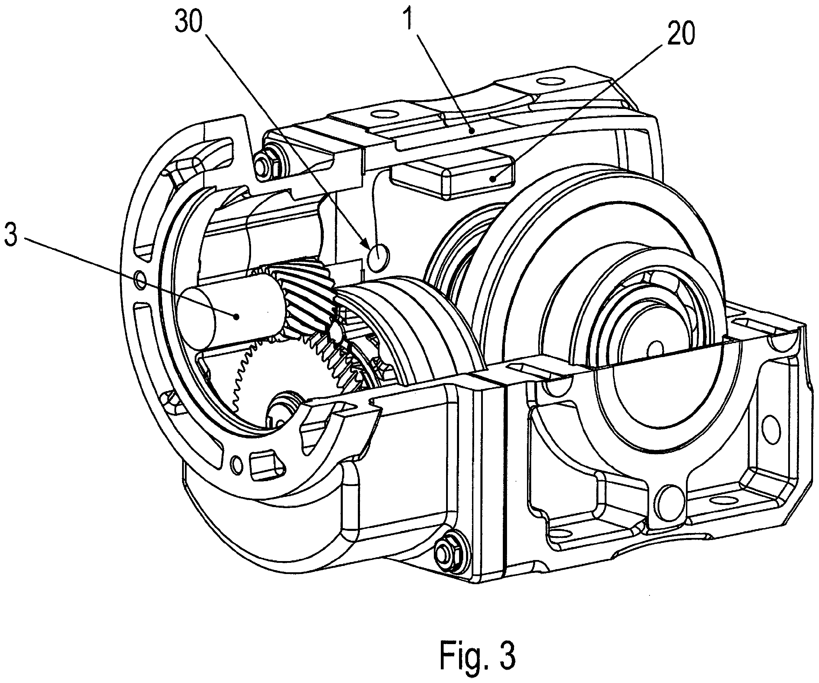

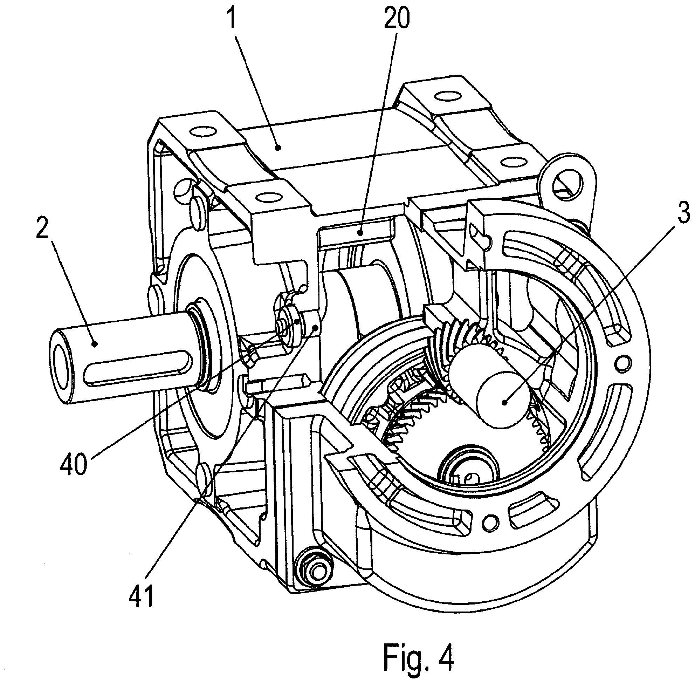

Wie in Figur 3 und 4 gezeigt, weist das Getriebe eine Ausnehmung 30 auf, in welcher eine Verschlussschraube 40 angeordnet ist, die die Ausnehmung30 verschließt. Somit ist durch Entfernen der Verschlussschraube 40 ein Ölwechsel in einfacher Weise durchführbar.

Die Verschlussschraube 40 weist einen Gewindeabschnitt 41 auf der mit dem Gewindeabschnitt der als Gewindebohrung ausgeführten Ausnehmung 30 schraubverbunden ist.

Die Verschlussschraube 40 ist vorzugsweise aus Kunststoff ausgeführt und das Gehäuseteil 1 aus Metall. Somit ist eine hohe Schutzart, insbesondere Dichtigkeit, erreichbar.

Mittig, also im Bereich der gedachten Schraubachse des Gewindeabschnitts 41 ist die Antennenleitung durch die Verschlussschraube 40 durchgeführt. Somit ist ein Herausführen der Antennenleitung in einfacher Weise und bei hoher Schutzart ausführbar. Insbesondere ist ein Herausfließen von Schmieröl des Getriebes verhindert.

Vorzugsweise wird die Verschlussschraube 30 an derjenigen Seite des Getriebes angeordnet, an welcher kein antreibender Motor und keine vom Getriebe anzutreibende Vorrichtung angeordnet ist. Somit ist ein ungestörtes Abstrahlen von der Antennenleitung aus ausführbar.

Das Modul 20 ist in gleichartiger Weise am Gehäuseteil 1 angeordnet wie auch in Figur 1 oder 2.

Mittels der festen Verbindung zwischen Antennenleitung und Verschlussschraube 40 ist die Antenne, also der die elektromagnetische Strahlung abstrahlende Teil der Antennenleitung einschraubbar in das Gehäuseteil 1.

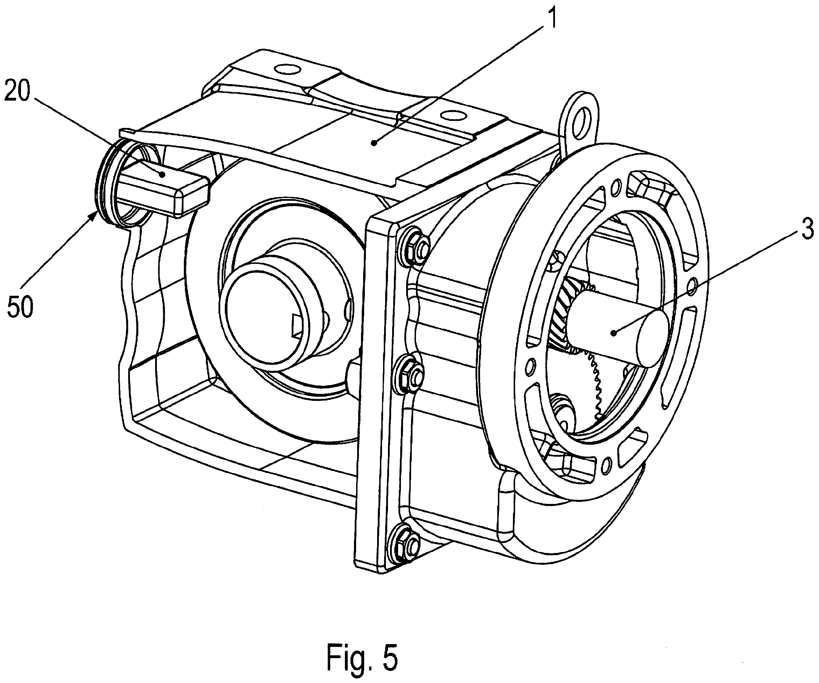

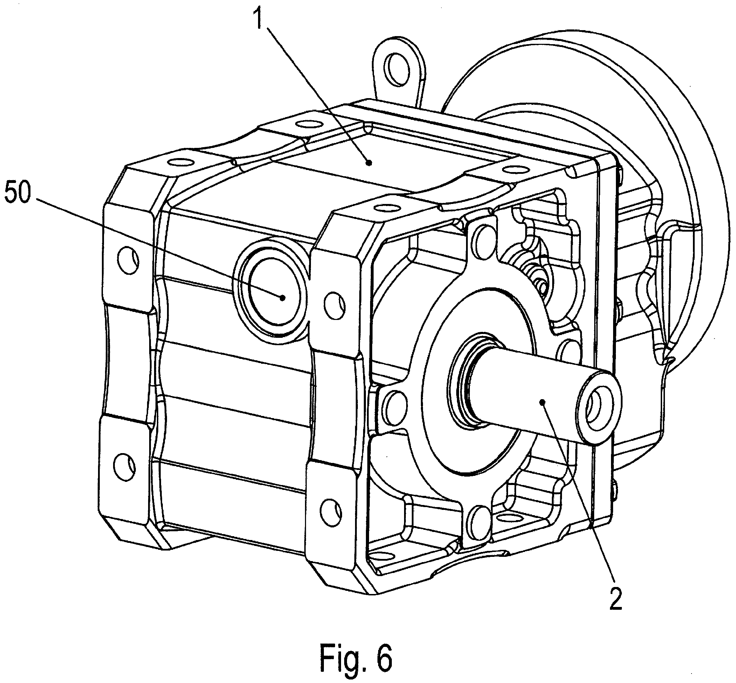

Bei dem in Figur 5 und 6 gezeigten erfindungsgemäßen Ausführungsbeispiel ist eine Ausnehmung in der Wandung des vorzugsweise metallischen Gehäuseteils 1 mittels einer Verschlusskappe 50 verschlossen. Die Verschlusskappe 50 ist vorzugsweise aus Kunststoff ausgeführt.

An der zum Innenraumberiech des Getriebes zugewandten Seite der Verschlusskappe 50 ist das Modul 20 angeordnet. Insbesondere ist das Modul 20 klebeverbunden oder magnetisch verbunden, wobei hierzu in der Verschlusskappe 50 ein Dauermagnet umspritzt vorgesehen ist, welcher ein ferromagnetisches Teil des Moduls 20 oder einen im oder am Modul 20 angeordneten Dauermagneten anzieht.

Die Antennenleitung ist vorzugsweise an der zum Innenraumbereich des Getriebes zugewandten Seite der Verschlusskappe 50 oder am Modul 20 angeordnet. Somit muss die von der Antennenleitung abgestrahlte elektromagnetische Strahlung nur durch die Wandung der Verschlusskappe 50 hindurchdringen, so dass keine wesentliche Dämpfung mittels der Verschlusskappe 50 bewirkt wird.

Alternativ ist aber auch die Antennenleitung 50, also Antenne, in der Verschlussschraube 40 umspritzt vorgesehen und das Modul 20 wieder mit der Antennenleitung elektrisch verbunden, insbesondere mittels Kontakten.

Bei einem weiteren erfindungsgemäßen Ausführungsbeispiel ist das Getriebe mehrstufig ausgeführt.

### Bezugszeichenliste

1 Gehäuseteil
2 Abtriebswelle
3 eintreibende Welle
4 Antenne
20 Modul
30 Ausnehmung für Verschlussschraube
40 Verschlussschraube, insbesondere aus Kunststoff
41 Gewindeabschnitt der Verschlussschraube 40
50 Verschlusskappe

## Patentansprüche

1. Getriebe mit Gehäuseteil (1), Modul (20) und Antennenleitung,
wobei das Modul (20) im Innenraumbereich des Getriebes angeordnet ist,
**wobei** ein vom Modul (20) erzeugtes Signal, insbesondere hochfrequentes Signal, mittels der Antennenleitung gesendet wird und von einem außerhalb des Getriebes angeordneten Empfänger empfangbar ist oder zu einem außerhalb des Getriebes angeordneten Empfänger übertragbar ist,
**dadurch gekennzeichnet, dass**
**die Antennenleitung vom Modul (20) durch eine durch das Gehäuseteil (1) durchgehende Ausnehmung (30) geführt ist,**
**wobei die Ausnehmung (30) eine Gewindebohrung ist, in welche eine Verschlussschraube (40) eingeschraubt ist, wobei die Antennenleitung vorzugsweise mittig in der Verschlussschraube (40) vom Innenraumbereich des Getriebes zur äußeren Umgebung des Getriebes durchgeführt ist.**

2. Getriebe nach Anspruch 1,
**dadurch gekennzeichnet, dass**
ein Isoliermittel, insbesondere elektrisches Isoliermittel, zwischen der Antennenleitung und dem Gehäuseteil (1) angeordnet ist,
insbesondere wobei das Isoliermittel eine Ummantelung der Antennenleitung und/oder eine Dichtscheibe und/oder Dichtring ist.

3. Getriebe nach mindestens einem der vorangegangenen Ansprüche,
**dadurch gekennzeichnet, dass**
das Modul (20) eine elektronische Schaltung aufweist, insbesondere umfassend einen elektronischen Speicher, insbesondere einen langzeitstabilen Speicher, in welchem vom Sensor erfasste Werte gespeichert werden.

4. Getriebe nach Anspruch 3,
**dadurch gekennzeichnet, dass**
die elektronische Schaltung mit einem Sensor zur Erfassung des Wertes einer physikalischen Größe verbunden ist.

5. Getriebe nach Anspruch 3 oder 4,
**dadurch gekennzeichnet, dass**
im Speicher auch eine Identitätsinformation gespeichert ist und/oder die Information eines elektronischen Typenschildes,
insbesondere so dass die elektronische Schaltung samt Antennenleitung derart gestaltet ist, dass sie einem RFID entsprechend verwendbar ist, insbesondere also von einem RFID-Lesegerät Daten aus dem Speicher lesbar sind.

6. Getriebe nach Anspruch 3, 5 oder 4,
**dadurch gekennzeichnet, dass**
die elektronische Schaltung des Moduls (20) versorgt ist aus einem Peltierelement und/oder aus einem Piezo-Element.

7. Getriebe nach mindestens einem der vorangegangenen Ansprüche,
**dadurch gekennzeichnet, dass**
die Ausnehmung (30) von einer Verschlusskappe (50) verschlossen ist, wobei das Modul (20) an der dem Innenraumbereich des Getriebes zugewandten Seite des Getriebes angeordnet ist, insbesondere mit der Verschlusskappe (50) verbunden ist.

8. Getriebe nach Anspruch 7 **dadurch gekennzeichnet, dass**
die Verschlusskappe (50) aus Kunststoff hergestellt ist, insbesondere als Kunststoffspritzgussteil.

9. Getriebe nach mindestens einem der Ansprüche 7 und 8, **dadurch gekennzeichnet, dass**
die mit dem Modul (20), insbesondere mit der elektronischen Schaltung des Moduls, elektrisch verbundene Antennenleitung in der Verschlusskappe (50) mit Kunststoff umspritzt angeordnet ist
insbesondere als Antenne (4).

10. Getriebe nach mindestens einem der vorangegangenen Ansprüche,
**dadurch gekennzeichnet, dass**
ein als Antenne (4) fungierender Teil der Antennenleitung samt seiner als Isoliermittel fungierenden Ummantelung pressverbunden ist mit dem Gehäuseteil (1).

11. Getriebe nach mindestens einem der Ansprüche 7 bis 9, **dadurch gekennzeichnet, dass**
das Modul (20) magnetisch an der Verschlusskappe (50) gehalten ist, wobei das Modul (20) und/oder die Verschlusskappe (50) einen Dauermagneten aufweist,
insbesondere wobei der Dauermagnet mit Kunststoff umspritzt ist
und/oder wobei das Modul (20) und/oder die Verschlusskappe (50) ein ferromagnetisches Teil aufweist, das mit dem Dauermagneten in Wirkverbindung ist, insbesondere von dem Dauermagneten angezogen wird.

12. Getriebe nach mindestens einem der Ansprüche 7, 8, 9 und 11, **dadurch gekennzeichnet, dass**
zur Positionierung des Moduls an der dem Getriebeinnenraumberiech zugewandten Seite der Verschlusskappe (50) ein Zentrierkragen aus Kunststoff ausgeformt ist. insbesondere in Spritzgusstechnik.

## Claims

1. A gear unit with housing part (1), module (20) and antenna line,
wherein the module (20) is arranged in the interior region of the gear unit,
wherein a signal generated by the module (20), in particular a high-frequency signal, is emitted by means of the antenna line and can be received by a receiver arranged outside the gear unit or can be transmitted to a receiver arranged outside the gear unit,
**characterised in that**
the antenna line is guided from the module (20) through a cutout (30) which passes through the housing part (1),
wherein the cutout (30) is a threaded bore into which a screw plug (40) is screwed in, wherein the antenna line is guided through preferably centrally in the screw plug (40) from the interior region of the gear unit to the outer surroundings of the gear unit.

2. A gear unit according to Claim 1,
**characterised in that**
an insulating means, in particular electrical insulating means, is arranged between the antenna line and the housing part (1),
in particular with the insulating means being a coating of the antenna line and/or a sealing disc and/or sealing ring.

3. A gear unit according to at least one of the preceding claims,
**characterised in that**
the module (20) has an electronic circuit, in particular comprising an electronic memory, in particular a long-term stable memory, in which values detected by the sensor are stored.

4. A gear unit according to Claim 3,
**characterised in that**
the electronic circuit is connected to a sensor for acquiring the value of a physical variable.

5. A gear unit according to Claim 3 or 4,
**characterised in that**
identity information and/or the information of an electronic rating plate is also stored in the memory,
in particular so that the electronic circuit plus antenna line is configured such that it can be used in the manner of an RFID, in particular therefore data from the memory can be read by an RFID reader.

6. A gear unit according to Claim 3, 5 or 4,
**characterised in that**
the electronic circuit of the module (20) is supplied from a Peltier element and/or from a piezoelement.

7. A gear unit according to at least one of the preceding claims,
**characterised in that**
the cutout (30) is closed by a closing cap (50),
the module (20) being arranged on the side of the gear unit facing the interior region of the gear unit, in particular being connected to the closing cap (50).

8. A gear unit according to Claim 7,
**characterised in that**
the closing cap (50) is produced from plastics material, in particular as an injection-moulded plastics material part.

9. A gear unit according to at least one of Claims 7 and 8,
**characterised in that**
the antenna line which is electrically connected to the module (20), in particular to the electronic circuit of the module, is arranged encapsulated with plastics material in the closing cap (50),
in particular as an antenna (4).

10. A gear unit according to at least one of the preceding claims,
**characterised in that**
a part of the antenna line which functions as an antenna (4) plus its coating which functions as an insulating means is press-connected to the housing part (1).

11. A gear unit according to at least one of Claims 7 to 9,
**characterised in that**
the module (20) is held magnetically on the closing cap (50), the module (20) and/or the closing cap (50) having a permanent magnet,
in particular with the permanent magnet being encapsulated with plastics material
and/or the module (20) and/or the closing cap (50) having a ferromagnetic part which is in an operative connection with the permanent magnet, in particular is attracted by the permanent magnet.

12. A gear unit according to at least one of Claims 7, 8, 9 and 11,
**characterised in that**
to position the module, a centring collar of plastics material is formed, in particular by injection moulding, on that side of the closing cap (50) which faces the gear unit interior region.

## Revendications

1. Transmission comprenant une partie (1) formant carter, un module (20) et une ligne d'antenne,
ledit module (20) étant disposé dans la région de l'espace interne de la transmission, sachant qu'un signal engendré par ledit module (20), en particulier un signal de haute fréquence, est émis au moyen de ladite ligne d'antenne et peut être reçu par un récepteur situé à l'extérieur de la transmission, ou peut être transmis à un récepteur situé à l'extérieur de ladite transmission,
**caractérisée par le fait que**
la ligne d'antenne est guidée par le module (20), par l'intermédiaire d'un évidement (30) qui traverse intégralement la partie (1) formant carter,
lequel évidement (30) est un perçage taraudé dans lequel une vis d'obturation (40) est vissée, ladite ligne d'antenne étant, de préférence, guidée d'un trait au centre de ladite vis d'obturation (40), depuis la région de l'espace interne de la transmission jusqu'à l'espace environnant à l'extérieur de ladite transmission.

2. Transmission selon la revendication 1,
**caractérisée par le fait**
**qu'**un moyen d'isolation, en particulier un moyen d'isolation électrique, est interposé entre la ligne d'antenne et la partie (1) formant carter,
sachant notamment que ledit moyen d'isolation est un gainage de ladite ligne d'antenne et/ou un disque d'étanchement et/ou une bague d'étanchement.

3. Transmission selon au moins l'une des revendications précédentes,
**caractérisée par le fait que**
le module (20) comporte un circuit électronique incluant notamment une mémoire électronique, en particulier une mémoire stable à long terme, dans laquelle sont stockées des valeurs détectées par le capteur.

4. Transmission selon la revendication 3,
**caractérisée par le fait que**
le circuit électronique est connecté à un capteur affecté à la détection de la valeur d'une grandeur physique.

5. Transmission selon la revendication 3 ou 4,
**caractérisée par le fait que**
la mémoire stocke également une information d'identité, et/ou l'information d'une plaquette signalétique électronique,
notamment de façon telle que le circuit électronique soit conçu, associativement à la ligne d'antenne, pour pouvoir être utilisé en correspondance avec un système RFID, c'est-à-dire, en particulier, pour que des données émanant de la mémoire puissent être lues par un appareil de lecture RFID.

6. Transmission selon la revendication 3, 5 ou 4,
**caractérisée par le fait que**
le circuit électronique du module (20) est alimenté à partir d'un élément Peltier et/ou à partir d'un piézoélément.

7. Transmission selon au moins l'une des revendications précédentes,
**caractérisée par le fait que**
l'évidement (30) est obturé par un capuchon obturateur (50),
sachant que le module (20) est disposé du côte de la transmission qui pointe vers la région de l'espace interne de ladite transmission, et est notamment relié audit capuchon obturateur (50).

8. Transmission selon la revendication 7,
**caractérisée par le fait que**
le capuchon obturateur (50) est fabriqué en matière plastique, notamment en tant que pièce en matière plastique moulée par injection.

9. Transmission selon au moins l'une des revendications 7 et 8,
**caractérisée par le fait que**
la ligne d'antenne raccordée électriquement au module (20), en particulier au circuit électronique dudit module, est intégrée dans le capuchon obturateur (50) avec enrobage de matière plastique injectée,
notamment en tant qu'antenne (4).

10. Transmission selon au moins l'une des revendications précédentes,
**caractérisée par le fait**
**qu'**une partie de la ligne d'antenne remplissant la fonction d'une antenne (4) est reliée par compression à la partie (1) formant carter, conjointement à son gainage remplissant la fonction d'un moyen d'isolation.

11. Transmission selon au moins l'une des revendications 7 à 9,
**caractérisée par le fait que**
le module (20) est retenu magnétiquement sur le capuchon obturateur (50), ledit module (20) et/ou ledit capuchon obturateur (50) étant pourvu(s) d'un aimant permanent,
sachant notamment que ledit aimant permanent est enrobé de matière plastique par injection
et/ou sachant que ledit module (20) et/ou ledit capuchon obturateur (50) comporte(nt) une pièce ferromagnétique qui est en liaison opérante avec l'aimant permanent et est, en particulier, attirée par ledit aimant permanent.

12. Transmission selon au moins l'une des revendications 7, 8, 9 et 11,
**caractérisée par le fait**
**qu'**une collerette de centrage est façonnée en matière plastique, notamment par une technique de moulage par injection, en vue du positionnement du module du côté du capuchon obturateur (50) qui pointe vers la région de l'espace interne de ladite transmission.
